(19) Europäisches Patentamt
European Patent Office
Office européen des brevets

(11) Publication number: **0 228 693 B1**

(12) # EUROPEAN PATENT SPECIFICATION

(45) Date of publication of patent specification: **14.08.91**

(51) Int. Cl.5: **C04B 35/58**, C22C 29/14

(21) Application number: **86117925.7**

(22) Date of filing: **23.12.86**

The file contains technical information submitted after the application was filed and not included in this specification

(54) **Hard sintered compact for tool.**

(30) Priority: **28.12.85 JP 297545/85**

(43) Date of publication of application: **15.07.87 Bulletin 87/29**

(45) Publication of the grant of the patent: **14.08.91 Bulletin 91/33**

(84) Designated Contracting States: **BE DE FR GB**

(56) References cited:
**EP-A- 0 155 696**
**DE-A- 3 044 945**
**FR-A- 2 375 155**
**GB-A- 2 048 956**

**PATENT ABSTRACTS OF JAPAN, vol. 7, no. 285 (C-201)[1430], 20th December 1983; & JP-A-58 164 750 (MITSUBISHI KINZOKU K.K.) 29-09-1983**

**PATENT ABSTRACTS OF JAPAN, vol. 7, no. 219 (C-188)[1364], 29th September 1983; & JP-A-58 113 348 (MITSUBISHI KINZOKU K.K.) 06-07-1983**

**PATENT ABSTRACTS OF JAPAN, vol. 7, no. 219 (C-188)[1364], 29th September 1983; & JP-A-58 113 349 (MITSUBISHI KINZOKU K.K.) 06-07-1983**

(73) Proprietor: **SUMITOMO ELECTRIC INDUSTRIES, LTD.**
**5-33, Kitahama 4-chome, Chuo-ku**
**Osaka-shi, Osaka 541(JP)**

(72) Inventor: **Nakai, Tetsuo c/o Itami Works of Sumitomo**
**Electric Industries Ltd. 1-1 Koyakita 1-chome**
**Itami-shi Hyogo-ken(JP)**
Inventor: **Goto, Mitsuhiro c/o Itami Works of Sumitomo**
**Electric Industries Ltd. 1-1 Koyakita 1-chome**
**Itami-shi Hyogo-ken(JP)**

(74) Representative: **Patentanwälte Kirschner & Grosse**
**Forstenrieder Allee 59**
**W-8000 München 71(DE)**

EP 0 228 693 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to an improvement in a hard sintered compact for a tool which is prepared by cubic boron nitride (hereinafter referred to as cBN).

Description of the Prior Art

Cubic boron nitride is the hardest substance next to diamond, and sintered compacts thereof are applied to various cutting tools. Japanese Patent Laying-Open Gazette No. 77811/1978 discloses an example of such a cBN sintered compact applicable to a cutting tool.

The prior art discloses a hard sintered compact which mainly contains 80 to 40 percent by volume of cubic boron nitride and a residue of carbide, nitride, boride or silicide of a transition metal selected from groups IVa, Va and VIa of the periodic table, a mixture thereof or a mutual solid-solution compound thereof, or those further comprising Si and/or Al. Such a compound is continuous in bonding phase in the structure of the sintered compact. This hard sintered compact for a tool employs carbide, nitride, boride or silicide of a transition metal selected from the groups IVa, Va and VIa of the periodic table, a mutual solid-solution compound thereof or the like. Such compounds are relatively hard and of high melting points. Therefore, sintered compacts prepared by these compounds generally present high performance in application to cutting tools.

It has been confirmed through the aforementioned commercially available sintered compact that the hard sintered compact for a tool as disclosed in Japanese Patent Laying-Open Gazette No. 77811/1978 generally presents high performance when the same is applied to a cutting tool.

However, the sintered compact still has the following disadvantage when the same is applied to a cutting tool, depending on the usage.

When a tool of the cBN sintered compact is used for intermittently interrrupted cutting the hardened steel which has a key groove or a hole, the cutting edge of the cBN sintered compact is applied high stress to be broken. The breakage of the cutting edge may occur due to lack of the strength of cutting edge and crater wear which takes place at the rake surface of the tool to sharpen cutting edge, whereby tool is broken.

Such breakage of the cutting edge of the tool in the aforementioned usage shows that the hard sintered compact for a tool itself is insufficient in strength and inferior in crater wear resistance.

SUMMARY OF THE INVENTION

Accordingly, it is an object of the present invention to provide a hard sintered compact for a tool which is further superior in strength and wear resistance to the aforementioned conventional sintered compact of cubic boron nitride.

In order to attain the aforementioned object, the inventors have made deep study to find that a sintered compact obtained by mixing approximately 50 to 75 percent by volume of cBN and a binder containing approximately 20 to 50 percent by weight of Al in the form of aluminium metal or an aluminium compound and one or more Ti compounds selected from a group of $TiN_z$, $Ti(C,N)_z$, $TiC_z$, $(Ti,M)C_z$, $(Ti,M)\ (C,N)_z$ and $(Ti,M)N_z$ (where M indicates a transition metal element of the group IVa, Va or VIa of the periodic table excepting Ti and z is within a range of $0.5 \leq z \leq 0.85$) in which the atomic ratio of Ti to the transition metal of the group IVa, Va or VIa of the periodic table including Ti is about 2/3 to about 97/100 and the total tungsten concentration in the binder is 4 to 40 percent by weight, and sintering the mixture under high pressure conditions in which cBN is stable is higher in strength than and superior in abrasion resistance to the conventional sintered compact of cubic boron nitride. The tungsten may be contained in the form of at least one of Ti compounds described above and tungsten carbide.

The sintered compact according to the present invention contains cBN, TiN, Ti(C,N), TiC, (Ti,M)C (Ti,M) (C,N) and (Ti,M)N, titanium boride, aluminum boride, aluminum nitride, tungsten compound and/or tungsten, and the bonding phases are continuous in the structure.

According to the present invention, a hard cBN sintered compact is obtained through mixed powder containing 50 to 75 percent by volume of cubic boron nitride powder and a residue of a binder.

The aforementioned cBN content is selected for the following reasons:

When the cBN content is less than about 50 percent by volume, hardness of the sintered compact is lowered as hereinabove described, whereby plastic flow takes place at the cutting edge to break the same. When, on the other hand, the cBN content exceeds about 75 percent by volume, wear resistance is abruptly lowered to increase crater, whereby the cutting edge is sharpened and broken. In case of cBN powder larger than 2 µm in average particle size, strength and hardness are lowered in a sintered compact containing less than about 65 percent by volume of cBN particles. Thus, in case of employing cBN particles larger than 2µm in average particle size, the cBN content in the mixed powder must be about 65 to 75 percent by volume. When, on the other hand, cBN particles larger than 30 µm in particle size are employed, the cutting edge is broken by chipping of the cBN particles themselves. Thus, it is not preferable to employ cBN particles larger than 30 µm in particle size.

When, on the other hand, only cBN particles smaller than 2 µm in particle size are employed, it is impossible to obtain a uniform sintered compact by mixed powder containing cBN particles in excess of about 65 percent by volume. However, when cBN particles smaller than 2 µm and preferably smaller than 1µm in particle size are employed, a uniformly structured sintered compact of high hardness can be obtained when the mixed powder contains about 50 to 65 percent by volume of such cBN powder.

According to the present invention, further, the binder mainly contains one or more components selected from $TiN_z$, $Ti(C,N)_z$, $TiC_z$, $(Ti,M)C_z$, $(Ti,M)\ (C,N)_z$ and $(Ti,M)N_z$ (where M indicates a transition metal element of the group IVa, Va or VIa of the periodic table excepting Ti and z is within a range of $0.5 \leqq z \leqq 0.85$). Namely, employed is a simple substance or a solid solution of carbide, nitride or carbo-nitride of Ti. Such substances contain free Ti, which easily reacts with cBN and Al compound to strictly bond the cubic boron nitride with the bonding phases.

With the aforementioned expression of the carbide, nitride, carbo-nitride and solid solution thereof containing Ti, the value z is within the range of $0.5 \leqq z \leqq 0.85$ for the following reason: When the value z is less than 0.5, the sintered compact is reduced in hardness while free Ti is decreased and the bond strength of cBN and the binder is reduced when the value z exceeds 0.85.

When the carbide, nitride or carbo-nitride of the transition metal element selected from the groups IVa, Va and VIa of the periodic table is mixed with one or more components of the carbide, nitride and carbo-nitride of Ti, the binder is improved in strength and the performance is further improved in comparison with the case of employing only the Ti compound as the binder.

the condition required for the Ti content in the binder is that the atomic ratio of Ti to the metal element selected from the groups IVa, Va and VIa of the periodic table including Ti is about 2/3 to 97/100. When the Ti content is less than about 2/3, the bond strength of the binder and cBN is reduced. When the atomic ratio is in excess of about 97/100, on the other hand, the binder is reduced in wear resistance and strength.

According to the present invention, further, the binder contains a considerable amount of about 20 to 50 percent by weight of Al in the form of aluminium metal or an aluminium compound. This is because Al reacts with $TiN_z$, $Ti(C,N)_z$, $TiC_z$, $(Ti,M)C_z$, $(Ti,M)\ (C,N)_z$ or $(Ti,M)N_z$ and cBN particles in the bonding phases to produce a compound such as $TiAl_3$, AlN or $AlB_2$ thereby to improve the bond strength of the bonding phases and the cBN particles. When the Al content is less than 20 percent by weight of the binder, the bond strength is reduced and the cBN particles are easily dropped, whereby crater wear resistance is reduced. When the Al content is excess of about 50 percent by weight, on the other hand, the content of the cBN particles is relatively decreased to reduce hardness, whereby the cutting edge is easily broken.

However, there may be a number of preferable combinations of the Al content and the Ti component content as obvious from Examples as hereinafter described.

First, when the aforementioned component containing Ti is expressed by $(TiC_z,MC)_y\text{-}(MN)_{1\text{-}y}$ or $(Ti,M)\ (C_y,N_{1\text{-}y}$ (where M indicates the transition metal element selected from the groups IVa, Va and VIa of the periodic table excepting Ti and y is within a range of $0.3 < y < 1.0$) in case where the binder contains about 25 to 50 percent by weight of Al, one or more such compounds are preferably contained.

Second, when the binder contains about 20 to 35 percent by weight of Al, the value y in the above chemical formula is preferably within a range of $0 < y \leqq 0.3$.

According to the present invention, further, the binder contains about 4 to 40 percent by weight of tungsten. Such tungsten is added to improve wear resistance, which cannot be improved if the tungsten content is less than about 4 percent by weight of the binder. When the tungsten content is in excess of about 40 percent by weight, on the other hand, the content of the Ti compound is lowered whereby bond strength of cBN and the binder is reduced. Particularly when W is employed as M in the above chemical formula, the binder is further improved in wear resistance and strength, thereby to obtain an hard sintered compact of high quality.

In the sintered compact according to the present invention, the bonding phase of the aforementioned binder is continuous in the structure, which is entirely uniformalized. When different-sized cBN particles are combined in the cBN powder, fine cBN particles are filled around or between coarse cBN particles, whereby the cBN content can be increased. As the result, the sintered compact is improved in strength and wear resistance.

In order to manufacture the sintered compact according to the present invention, about 50 to 75 percent by volume of cBN powder is mixed with about 25 to 50 percent by volume of the aforementioned binder, to be sintered under high pressure and temperature in which cBN is stable. It is believed that free Ti or free Al present in the aforementioned $TiN_z$, $Ti(C,N)_z$, $TiC_z$, $(Ti,M)C_z$, $(Ti,M)\ (C,N)_z$ or $(Ti,M)N_z$ or Al added in the form of an intermetallic compound reacts with cBN to form nitride or boride of Ti or Al through the aforementioned sintering to improve bond strength of cBN and the binder.

Tungsten may be mixed in the binder in the form of pure tungsten, tungsten boride or tungsten carbide (WC). Similarly, Al may be mixed in the form of Al compound.

With respect to the cubic boron nitride powder as the raw material, a plurality of types of different-sized cBN particles may be mixed as hereinabove described, while only particles smaller than 2μm, preferably smaller than 1 μm in average particle size may be employed.

The hard sintered compact for a tool according to the present invention is excellent in thermal conductivity, strength and wear resistance whereby the same is applicable to interrupted cutting of hardened steel and cutting cast iron or thermal resistant alloy.

The above and other objects, features, aspects and advantages of the present invention will become more apparent from the following detailed description of the present invention when taken in conjunction with the accompanying drawings.

BRIEF DESCRIPTION OF THE DRAWINGS

Fig. 1 is a graph showing the results of a cutting test in Example 4;
Fig. 2 is a graph showing the results of a cutting test in Example 6;

DESCRIPTION OF THE PREFERRED EMBODIMENTS

Example 1

$TiN_{0.7}$, Al and WC powder were mixed in the weight ratio of 6:3:1 to be processed under vacuum at a temperature of 1200° C for one hour. The processed material was pulverized through a ball and a pot of cemented carbide to prepare powder smaller than 1μm in particle size. Then the powder thus obtained was mixed with various cBN powder materials different in particle size in the ratios as listed in Table 1. Discs of WC-10wt.%Co were inserted in vessels of Mo, which were then filled with the powder materials mixed as described above. Each vessel was placed in a superhigh pressure apparatus and processed under a pressure of 50 Kb and a temperature of 1350° C for 15 minutes to obtain a sintered compact.

The structure of each sintered compact thus obtained was observed through a scanning type electron microscope, to find that cBN particles were uniformly dispersed through the binder phase.

These sintered compacts were examined by X-ray diffraction and, as a result, in addition to peaks of cBN and (Ti,W) (C,N), peaks considered as those of $TiB_2$, $AlB_2$, AlN and W were found. The atomic ratio of Ti to W measured through chemical analysis was 93:7.

Further, it was recognized that each cBN sintered compact was strongly bonded to the base material of cemented carbide.

The obtained sintered compacts were worked into inserts for cutting works, which inserts were adapted to cut SUJ-2 steel materials ($H_{RC}$: 58 to 60) of 100 mm in outer diameter each having eight holes of 10 mm in diameter provided in the outer periphery at intervals of 20 mm. Table 1 also shows the results of the cutting test.

Table 1

| Sample | cBN | | Result of Cutting Test |
| --- | --- | --- | --- |
| | Particle Size (μm) | Content (vol. %) | |
| *aa-1 | 1 ~ 2 | 40 | broken after 10 min. |
| aa-2 | smaller than 1 | 50 | broken after 40 min. |
| aa-3 | " | 60 | not broken after cutting for 60 min. |
| aa-4 | 1 ~ 3 | 65 | " |
| aa-5 | 5 ~ 10 | 70 | " |
| aa-6 | 2 ~ 8 | 75 | broken after 50 min. |
| *aa-7 | 2 ~ 10 | 80 | broken after 10 min. |

*comparative sample; underlined parameter is outside bounds of present invention.

Example 2

Binder powder materials as listed in Tables 2-1 and 2-2 were prepared. The binders were mixed in the volume ratio of 3:7 with cBN powder materials each containing particles of 6 to 8 μm and those smaller than 3 μm in particle size in the ratio of 7:3, to be sintered under a superhigh pressure similarly to Example 1.

The structure of each sintered compact thus obtained was observed to recognize that cBN particles smaller than 3 μm in particle size were uniformly dispersed in clearances between or around cBN particles of 6 to 8 μm in particle size through the binder.

The sintered compacts were further examined through X-ray diffraction. As a result it was observed that the sintered compacts obtained through the binders Nos. 2, 3, 4, 5, 6, 10 and 11 within the scope of the present invention presented peaks considered as those of $TiB_2$ and $AlB_2$ in addition to peaks of cBN and carbide, nitride and carbo-nitride containing Ti.

In the sintered compacts prepared through the binders Nos. 7, 10 and 11, further, peaks of WC were observed in addition to the said peaks.

In the sintered compact obtained through the binder No. 1, on the other hand, a peak considered as that of $Ti_3Al$ or $Al_3Ti$ was observed.

Then the respective sintered compacts thus obtained were worked into tools for cutting works, to cut SKD-11 die steel ($H_{RC}$: 60) of 100 mm in outer diameter each having a sectionally U-shaped groove in the outer periphery. Cutting conditions were as follows:

Cutting Speed: 110 m/min.

Depth of Cut: 0.2 mm

Feed: 0.15 mm/rev.

Table 3 shows the results of abrasion resistance of the tips examined through the cutting test.

A round bar of SKD-11 steel ($H_{RC}$: 60) having no groove was subjected to the same cutting test under the same conditions for 20 minutes, to evaluate crater wear resistance. Table 3 also shows the result.

Table 2-1

| Binder No. | Composition of Binder | |
|---|---|---|
| * 1 | $60(Ti_{0.9},Zr_{0.1})C_{0.4}$ | 20WC 20Al |
| 2 | $60(Ti_{0.9},Zr_{0.1})N_{0.5}$ | 10WC 30Al |
| 3 | $50(Ti_{0.95},Hf_{0.05})(C_{0.5},N_{0.2})$ | 15WC 35Al |
| 4 | $50(Ti_{0.9},Ta_{0.05},W_{0.05})(C_{0.1},N_{0.5})$ | 10WC 40Al |
| 5 | $50(Ti_{0.8},Nb_{0.1},Mo_{0.1})(C_{0.4},N_{0.3})$ | 5WC 45Al |
| 6 | $50(Ti_{0.7},V_{0.2},Cr_{0.1})C_{0.8}$ | 5WC 45Al |
| * 7 | $50(Ti_{0.6},W_{0.4})(C_{0.3},N_{0.3})$ | 10WC 40Al |
| * 8 | $30(Ti_{0.8},W_{0.2})(C_{0.2},N_{0.5})$ | 10WC 60Al |
| * 9 | $20(Ti_{0.9},W_{0.1})C_{0.6}$ | 50WC 30Al |
| * 10 | $30(Ti_{0.9},Zr_{0.1})N_{0.5}$ | 45WC 25Al |
| 11 | $35(Ti_{0.9},Zr_{0.1})(C_{0.2},N_{0.5})$ | 30WC 35Al |
| * 12 | $89(Ti,C_{0.7})$ | 3WC 8Al |

*comparative sample ; underlined parameters are outside of bounds of invention.

Table 2-2

| Binder No. | Atomic Ratio of Ti to Metal of Group IVa, Va or VIa excepting Ti |
|---|---|
| * 1 | 81.9 : 18.1 |
| 2 | 85.9 : 14.1 |
| 3 | 85.7 : 14.3 |
| 4 | 83.2 : 16.8 |
| 5 | 77.2 : 22.8 |
| 6 | 67.9 : 32.1 |
| * 7 | 53.9 : 46.1 |
| * 8 | 70.1 : 29.9 |
| * 9 | 46.8 : 53.2 |
| *10 | 60.6 : 39.4 |
| 11 | 69.9 : 30.1 |
| *12 | 99.0 : 1.0 |

* comparative sample; underlined parameters are outside of bounds of invention.

Table 3

| Binder No. | Breaking Resistance (Cutting Time to Breaking) | Abrasion Resistance (Crater (μm)) |
|---|---|---|
| * 1 | 30 sec. | 60 |
| 2 | 25 min. | 30 |
| 3 | 30 min. | 28 |
| 4 | 20 min. | 33 |
| 5 | 28 min. | 35 |
| 6 | 18 min. | 32 |
| * 7 | 2 min. | 41 |
| * 8 | 1 min. | 65 |
| * 9 | 45 sec. | 35 |
| *10 | 15 min. | 25 |
| 11 | 23 min. | 26 |
| *12 | 10 sec. | 70 |

* comparative sample; Binder No.10 is a border line case near the bounds of the invention.

Example 3

Powder materials as listed in Tables 4-1 and 4-2 were mixed in prescribed ratios to be processed in a vacuum at a temperature of 1350°C for one hour. These materials were pulverized through a ball and a pot of cemented carbide. Then the obtained powder materials were mixed with cBN powder materials of 1 to 2 μm in particle size in the volume ratio of 4:6, and the mixed powder materials were filled in Mo vessels. Each vessel was placed in a high pressure apparatus to be retained at a temperature of 1400°C and a pressure of 50 Kb for 20 minutes, thereby to obtain a sintered compact.

The structure of each sintered compact thus obtained was observed by SEM, to find that cBN particles were uniformly dispersed through the binder. Each sintered compact was further examined through X-ray diffraction. As a result, observed were peaks considered as those of cBN, (Ti,W)N or (TiW)C, $TiB_2$, $AlB_2$ or AlN and boride of W.

Cutting tools were prepared by the aforementioned sintered compacts, to cut SKD-11 steel materials ($H_{RC}$: 58 to 60) of 100 mm in outer diameter each having a groove of 20 mm in width in the outer periphery. Cutting conditions were identical to those of Example 1. Table 4-1 also shows the results of the cutting test.

Table 4-1

| Sample No. | Composition of Powder (wt. %) | | | Result of Cutting Test |
|---|---|---|---|---|
| * aa-8 | $85TiN_{0.8}$ | $8TiAl_3$ | 7WC | broken in 4 min. |
| aa-9 | $25TiC_{0.7}$ | $65TiAl_3$ | 10WC | broken in 10 min. |
| aa-10 | $55TiN_{0.85}$ | $35TiAl_3$ | 10WC | broken in 40 min. |
| * aa-11 | $70TiC_{0.87}$ | 23Al | 7WC | broken in 5 min. |

* comparative sample; underlined parameters are outside of bounds of invention.

Table 4-2

| Sample No. | Atomic Ratio of Ti to Metal of Group IVa, Va or VIa excepting Ti |
|---|---|
| * aa-8 | 97.7 : 2.3 |
| aa-9 | 95.0 : 5.0 |
| aa-10 | 96.0 : 4.0 |
| * aa-11 | 97.[illegible] : [illegible] |

* comparative sample; underlined parameters are outside of bounds of invention.

Example 4

Mixed powder materials of carbide, nitride and carbo-nitride powder containing Ti and aluminum and tungsten carbide powder materials as listed in Table 5 were prepared. Then cBN powder materials each containing particles of 4 to 8 µm, 2 to 4 µm and smaller than 2 µm in particle size in the ratio of 3:5:2 were mixed with the aforementioned binder powder materials in the ratios as shown in Table 5. Then the obtained mixed powder materials were inserted in Mo vessels, each of which was heated in a vacuum furnace at the degree of vacuum of $10^{-4}$ Torr. under a temperature of 1000° C for 20 minutes for deairing. Then the mixed powder materials were sintered under a pressure of 55 Kb and a temperature of 1400° C.

The structure of each sintered compact thus obtained was examined through a scanning type electron microscope. As a result, it was observed that cBN particles smaller than 4 µm in particle size were present around or in clearances between cBN particles of 4 to 8µm in particle size through the binder.

Each sintered compact was identified through X-ray diffraction. As a result, it was observed that each compact presented peaks considered as those of $AlB_2$, $TiB_2$, TiN, W and WB in addition to peaks of cBN and carbide or carbo-nitride containing Ti. Further, the atomic ratio of Ti to the metal of the group IVa, Va or VIa excepting Ti in each sintered compact was surveyed through chemical analysis. The atomic ratio was 82:28 in the samples ba-1, ba-2, ba-3, ba-4, ba-6 and ba-7 while the same was 93:7 in the sample ba-5.

Then inserts for cutting works were prepared by the sintered compacts, to cut SKD-11 steel materials ($H_{RC}$: 59) each being in the form of a cylinder having four sectionally U-shaped grooves of 10 mm in width in the outer periphery. Cutting conditions were as follows:

Cutting Speed: 100 m/min
Depth of Cut: 0.2 mm
Feed: 0.1 mm/rev.
Type: Dry

Fig. 1 shows the results of the cutting test.

Table 5

| Sample | cBN Content * | Composition of Ti Component in Binder | Contents of Al and WC in Binder |
|---|---|---|---|
| ** ba-1 | 40 | $(Ti_{0.8},Ta_{0.05},Mo_{0.05},W_{0.1})(C_{0.5},N_{0.5})_{0.7}$ | |
| ba-2 | 63 | " | |
| ba-3 | 65 | " | Al:28 % |
| ba-4 | 70 | " | WC:15 % |
| ba-5 | 70 | $TiC_{0.6}$ | (wt. %) |
| ba-6 | 75 | $(Ti_{0.8},Ta_{0.05},Mo_{0.05},W_{0.1})(C_{0.5},N_{0.5})_{0.7}$ | |
| ** ba-7 | 78 | " | |

* Volume %

** comparative sample; underlined parameters are outside of bounds of invention.

Example 5

cBN materials obtained by mixing different-sized cBN particles as listed in Table 6-1 in the ratios as shown in Table 6-1 were mixed with binder powder materials as listed in Table 6-2 in the ratios of the cBN powder contents as shown in Table 6-1, to obtain sintered compacts similarly to Example 4.

The sintered compacts thus obtained were identified through X-ray diffraction. It was observed that the compacts presented peaks considered as those of $AlB_2$, AlN, $TiB_2$ and $WB_2$ in addition to peaks of cBN and (Ti,W) (C,N) in the samples ba-8, ba-9, ba-10, ba-11 and ba-12. In the sintered compact of the sample ba-13, peaks of cBN, (Ti,W) (C,N), $AlB_2$, AlN and $TiB_2$ were observed.

In each of the samples ba-8 to ba-11, the total atomic ratio of Ti to the metal of the group IVa, Va or VIa of the periodic table excepting Ti was 91:9. On the other hand, the atomic ratio was 55:45 in the sintered compact of the sample ba-12, while the same was 97.4:2.6 in the sintered compact of the sample ba-13.

Then the structure of each sintered compact was examined, so that it was observed that cBN particles were partially bonded in the samples ba-8, ba-9 and ba-13. In the samples ba-10, ba-11 and ba-12, on the other hand, fine cBN particles were filled in clearances between or around coarse cBN particles, which fine cBN particles were bonded through the binders.

The aforementioned sintered compacts were worked into cutting tips, to cut SNCM-9 steel materials ($H_{RC}$: 58 to 60) having key ways in outer peripheries. Cutting conditions were as follows:

Cutting Speed: 120 m/min.
Depth of Cut: 0.1 mm
Feed: 0.1 mm/rev.
Type: Dry

Table 7 shows the results of the cutting test.

Table 6-1

| | Sample | cBN Content (Vol. %) | cBN Particle Size |
|---|---|---|---|
| ~~Invention~~ | ba-8 | 65 | 4 - 6 μm (25 %)<br>2 - 4 μm (50 %)<br>smaller than 2 μm (25 %) |
| | ba-9 | 70 | 4 - 6 μm (65 %)<br>2 - 4 μm (10 %)<br>smaller than 1 μm (25 %) |
| | ba-10 | 75 | 6 - 10 μm (35 %)<br>2 - 4 μm (50 %)<br>1 - 2 μm (15 %) |
| ~~Reference Example~~ | ba-11 | 73 | 10 - 15 μm (50 %)<br>4 - 6 μm (50 %) |
| | * ba-12 | 70 | 4 - 6 μm (65 %)<br>2 - 4 μm (10 %)<br>smaller than 1 μm (25 %) |
| | * ba-13 | 70 | 4 - 6 μm (65 %)<br>2 - 4 μm (10 %)<br>smaller than 1 μm (25 %) |

* comparative sample

Table 6-2

| | Sample | Binder | |
|---|---|---|---|
| ~~Invention~~ | ba-8 | $Ti(C_{0.45},N_{0.55})_{0.73}$<br>WC<br>Al | 57 wt.%<br>18 wt.%<br>25 wt.% |
| | ba-9 | " | |
| | ba-10 | " | |
| | ba-11 | " | |
| ~~Reference Example~~ | *ba-12 | $(Ti_{0.65},W_{0.35})(C_{0.5},N_{0.5})_{0.7}$<br>WC<br>Al | 52 wt.%<br>18 wt.%<br>30 wt.% |
| | *ba-13 | $TiC_{0.7}$<br>WC<br>Al | 64 wt.%<br>6 wt.%<br>30 wt.% |

* comparative sample; atomic ratio Ti : M is out of bounds of invention.

Table 7

| Sample | Time to Breaking of Tip |
|---|---|
| ba-8 | 90 min. |
| ba-9 | 104 min. |
| ba-10 | 115 min. |
| ba-11 | 65 min. |
| * bá-12 | 8 min. |
| * ba-13 | 15 min. |

*: comparative sample

Example 6

A continuous cutting test was performed on SKD-11 steel materials to examine abrasion resistance of the sintered compacts obtained through Example 4 and 5.

Hardness of the work was $H_{RC}$ 60. Cutting conditions were as follows:

Cutting Speed: 100 m/min.
Depth of Cut: 0.2 mm
Feed: 0.1 mm/rev.
Type: Dry
Cutting time: 10 min.

Fig. 2 shows crater wear depth of rake face.

Example 7

Carbide and carbo-nitride powder materials containing Ti were mixed with aluminum powder and tungsten carbide powder to be previously heated a high temperature of 1200° C and preliminarily pulverized by a ball mill of cemented carbide, thereby to obtain binder powder materials smaller than 1μm in average particle size as listed in Table 8. The obtained binder powder materials were mixed with 70 percent by volume of cBN powder containing cBN particles of 4 to 10μm, 2 to 4 μm and smaller than 2 μm in particle size in the ratio of 5:4:1 and 30 percent by volume of binder and inserted in Mo vessels similarly to Example 4, to be sintered under a pressure of 40 Kb and a temperature of 1200° C.

The sintered compacts thus obtained were identified through X-ray diffraction, to observe peaks considered as those of $AlB_2$, AlN, boride of W and/or W and WC in addition to peaks of cBN and carbo-nitride containing Ti in the sintered compacts prepared by the binders ba-14 to ba-19 within the scope of the present invention. On the other hand, a peak of $Al_3Ti$ was observed in addition to the aforementioned peaks in the sintered compact prepared by the binder ba-20 and a large peak of WC was observed in that obtained by the binder ba-21 while a peak of $Ti_2Al$ was observed in the sintered compact of the binder ba-22 and a peak of $Al_3Ti$ was observed in the sintered compact of the binder ba-23.

The structure of each sintered compact was observed to find that fine cBN particles were dispersed through the binder around or in clearances between coarse cBN particles.

Then the respective sintered compacts were worked into cutting tools, to perform a cutting test on cut materials. The cut materials were formed by SUJ-2 steel materials ($H_{RC}$: 59 to 61) each being in the form of a cylinder (its inner diameter: 25 mm) having a key way in the inner peripheral surface. Cutting conditions were as follows:

Cutting Speed: 150 m/min.

Depth of Cut: 0.2 mm
Feed: 0.15 mm/rev.
Table 9 shows the results of the cutting test.

Table 8

| Binder | Composition of Binder | ** |
|---|---|---|
| ba-14 | $55(Ti_{0.9},Zr_{0.1})(C_{0.9},N_{0.1})_{0.75}$ 10WC, 35Al | 85 : 15 |
| ba-15 | $55(Ti_{0.8},V_{0.2})(C_{0.8},N_{0.2})_{0.70}$ 5WC, 40Al | 78 : 22 |
| ba-16 | $65(Ti_{0.75},Hf_{0.25})(C_{0.7},N_{0.3})_{0.70}$ 5WC, 30Al | 72 : 28 |
| ba-17 | $67(Ti_{0.9},Cr_{0.1})(C_{0.6},N_{0.4})_{0.8}$ 8WC, 25Al | 87 : 13 |
| ba-18 | $45(Ti_{0.95},W_{0.05})(C_{0.8},N_{0.2})_{0.60}$ 10WC, 45Al | 89 : 11 |
| ba-19 | $40(Ti_{0.8},W_{0.2})(C_{0.7},N_{0.3})_{0.53}$ 10WC, 50Al | 72 : 28 |
| * ba-20 | $35(Ti_{0.7},W_{0.3})(C_{0.9},N_{0.1})_{0.8}$ 10WC, <u>55Al</u> | <u>61 : 39</u> |
| * ba-21 | $20Ti(C_{0.7},N_{0.3})_{0.7}$ <u>50WC,</u> 30Al | <u>41 : 59</u> |
| * ba-22 | $50Ti(C_{0.8},N_{0.2})_{\underline{0.45}}$ 10WC, 40Al | 95 : 5 |
| * ba-23 | $50Ti(C_{0.8},N_{0.2})_{\underline{0.88}}$ 10WC, 40Al | 94 : 6 |
| * ba-24 | $72(Ti_{0.8},W_{0.2})C_{0.7}$ 10WC, <u>18Al</u> | 76 : 24 |

**: atomic ratio of Ti to metal of group IVa, Va or VIa excepting Ti

* comparative sample ; underlined parameters are outside of bounds of the invention.

Table 9

| Sample | Time Capable of Cutting |
|---|---|
| ba-14 | 62 min. |
| ba-15 | 58 min. |
| ba-16 | 45 min. |
| ba-17 | 38 min. |
| ba-18 | 59 min. |
| ba-19 | 50 min. |
| * ba-20 | 10 min. |
| * ba-21 | 2 min. |
| * ba-22 | 5 min. |
| * ba-23 | 3 min. |
| * ba-24 | 6 min. |

* comparative sample

Example 8

$(Ti_{0.9}, W_{0.1})$ $(C_{0.9}, N_{0.1})_{0.85}$, $TiAl_3$ and WC were mixed in the weight ratio of 4:5:1 to be uniformalized at a temperature of 1300 °C for one hour in nitrogen gas of 1 Torr. The powder thus obtained was pulverized through a pot and a ball of cemented carbide to be smaller than 1µm in average particle size. The binder thus obtained was analyzed, so that it was found that the same contained 30 percent by weight of Al. The atomic ratio of Ti to W was 87:13.

The aforementioned binder was mixed with cBN powder smaller than 6µm in particle size in the volume ratio of 30:70 and filled in an Mo vessel to be sintered under a pressure of 50 Kb and a temperature of 1350 °C for 15 minutes.

The sintered compact thus obtained was identified through X-ray diffraction, so that it was observed that the compact presented peaks considered as those of cBN, (Ti,W) (C,N), $AlB_2$, $AlN_2$, TiN and $WB_2$. No $Al_3Ti$ was observed.

This sintered compact was worked into cutting tools to perform a cutting test similarly to Example 4, whereby it was confirmed that performance of this cutting tip was about 3.2 times that of the sample ba-2 in Example 4.

Example 9

Nitride powder and carbo-nitride powder materials containing Ti were mixed with aluminum powder and WC powder and pulverized through a pot and a ball of cemented carbide to prepare binder powder materials smaller than 1 µm in average particle size as listed in Table 10. No WC powder was mixed in the sample ca-7 shown in Table 10. These binder powder materials were mixed in the volume ratio of 30:70 with cBN powder obtained by mixing cBN particles of 8 to 6 µm and 2 to 3 µm in particle size in the ratio of 2:1 to prepare mixed powder materials. These mixed powder materials were filled in Mo vessels placed with discs of cemented carbide in composition of WC-12wt.%Co. Then each vessel was introduced in a high pressure/temperature apparatus to be sintered under a pressure of 50 Kb and a temperature of 1280 °C for 15 minutes.

The sintered compacts thus obtained were examined through X-ray diffraction, so that it was observed the compacts presented peaks considered as those of cBN, nitride or carbo-nitride containing Ti, $TiB_2$, $AlB_2$, AlN and boride of W or W in the samples ca-1 to ca-7. Peaks of cBN, (TiW) (C,N), $AlB_2$, AlN, WC and a small amount of $TiB_2$ were observed in the sample ca-8. Peaks of cBN, TiN, $AlB_2$, ALN and $TiB_2$ were detected in the sample ca-9 and peaks of cBN, $TiB_2$, $WB_2$ and small amounts of AlN and $AlB_2$ were detected in the sample ca-10 while peaks of cBN, (Ti,W) (C,N), $TiB_2$, $AlB_2$, AlN, WB and $Al_3Ti$ were detected in the sample ca-11 and peaks considered as those of cBN, (Ti,W) (C,N), $TiB_2$, $AlB_2$, AlN, WB and WC were detected in the sample ca-12.

Then the composition of each sintered compact was observed through a scanning electron microscope, so that it was recognized that fine cBN particles were present in clearances between or around coarse cBN particles through bonding phases.

Table 11 shows Vickers hardness of the aforementioned sintered compacts. Cutting tools were prepared by the sintered compacts, to perform a cutting test. Each cut material was prepared by a cylinder of SCM-440 ($H_{RC}$: 59 to 62) of 80 mm in diameter having four grooves in the outer periphery. Cutting conditions were as follows:

Cutting Speed: 130 m/min.
Depth of Cut: 0.15mm
Feed: 0.10 mm/rev.

Table 11 also shows the results of measurement of the times to breaking of the inserts.

Table 10

| Sample | Composition of Binder | ** |
|---|---|---|
| ca-1 | $60Ti,N_{0.7}$<br>25Al, 15WC | 93 : 7 |
| ca-2 | $50(Ti_{0.8},Zr_{0.2})(C_{0.2},N_{0.8})_{0.7}$<br>35Al, 15WC | 72.6 : 27.4 |
| ca-3 | $65(Ti_{0.85},Ta_{0.1}W_{0.05})(C_{0.15},N_{0.85})_{0.6}$<br>30Al, 5WC | 82.5 : 17.5 |
| ca-4 | $62(Ti_{0.80},Hf_{0.10},Mo_{0.10})(C_{0.1}N_{0.9})_{0.7}$<br>28Al, 10WC | 75.3 : 24.7 |
| ca-5 | $70(Ti_{0.75},Nb_{0.10},V_{0.15})(C_{0.25},N_{0.75})_{0.8}$<br>25Al, 5WC | 73.3 : 26.7 |
| ca-6 | $65(Ti_{0.85},Cr_{0.15})(C_{0.2},N_{0.8})_{0.83}$<br>30Al, 5WC | 83.0 : 17.0 |
| * ca-8 (7) | <u>65</u> $(Ti_{0.7},$ <u>$W_{0.3}$</u>$)(C_{0.2},N_{0.8})_{0.7}$<br>25Al, <u>10WC</u> | <u>65 : 35</u> |
| * ca-9 (8) | $72TiN_{0.7}$<br>25Al, 3WC | <u>98.8 : 1.2</u> |
| * ca-10 (9) | $72(Ti_{0.8},W_{0.2})(C_{0.2},N_{~~0.2~~\ 0.8})_{0.8}$<br><u>18Al</u>, 10WC | 75.5 : 24.5 |
| ca-~~11~~ 10 | $70(Ti_{0.9},W_{0.1})(C_{0.4},N_{0.6})_{0.8}$<br>20Al, 10WC | 85.5 : 14.5 |

**: atomic ratio of Ti to metal of group IVa, Va or Va excepting Ti

* comparative sample; underlined parameters are outside of bounds of the invention.

Table 11

| Sample | Vickers Hardness | Cutting Time to Breaking of ~~Tip~~ insert (min.) |
|---|---|---|
| ca-1 | 3400 | 58 |
| ca-2 | 3450 | 61 |
| ca-3 | 3500 | 53 |
| ca-4 | 3450 | 51 |
| ca-5 | 3450 | 61 |
| ca-6 | 3500 | 48 |
| * ca-8 7 | 3500 | 25 |
| * ca-9 8 | 3400 | 18 |
| * ca-10 9 | 3450 | 23 |
| ca-12 10 | 3500 | 33 |

* comparative sample

Example 10

$(Ti_{0.85},W_{0.15})$ $(C_{0.1}, N_{0.9})_{0.75}$, Al and WC powder were mixed and pulverized to obtain binder powder smaller than 1 μm in particle size. The composition of this powder was 60%$(Ti_{0.85},W_{0.15})$ $(C_{0.1},N_{0.9})_{0.75}$-24wt.%Al-7wt.%WC. The atomic ratio of Ti to W in the binder was 81.7:18.3.

Such binder powder materials were mixed with cBN powder materials in the ratios as listed in Table 12, to be sintered under a superhigh pressure similarly to Example 9.

Respective sintered compacts thus obtained were worked into cutting inserts for cutting works, to perform a cutting test. Cut materials were formed by round bars of SUJ-3 materials ($H_{RC}$: 58 to 62) of 480 mm in diameter each having four holes of 4.5 mm in diameter provided in the outer peripheral surface at axial intervals of 10 mm along the circumferential direction. Cutting conditions were as follows:

Cutting Speed: 120 m/min.
Depth of Cut: 0.2 mm
Feed: 0.08 mm/rev.

Table 12 also shows the results of measurement of the cutting times to breaking of the inserts.

Table 12

| Sample | cBN Particle Size (Compouding Ratio) | cBN Content (vol.%) | Time to Breaking of ~~Tip~~ (min.) • insert |
|---|---|---|---|
| ca-13 | 20 - 30 μm (30)<br>10 - 20 μm (50)<br>smaller than 5 μm (20) | 75 | 45 |
| ca-14 | 10 - 20 μm (30)<br>smaller than 10 μm (70) | 70 | 56 |
| ca-15 | 8 - 10 μm (50)<br>3 - 4 μm (30)<br>smaller than 2 μm (20) | 65 | 63 |
| ca-16 | 8 - 10 μm (70)<br>3 - 4 μm (30) | 70 | 65 |
| ca-17 | 8 - 10 μm | 70 | 40 |
| ca-18 | 6 - 8 μm (80)<br>smaller than 4 μm (20) | 65 | 70 |
| ca-19 | 6 - 8 μm (75)<br>smaller than 4 μm (25) | 60 | 18 |
| ca-20 | 6 - 8 μm (75)<br>smaller than 4 μm (25) | 75 | 48 |
| * ca-21 | 6 - 8 μm (75)<br>smaller than 4 μm (25) | <u>78</u> | 15 |

*comparative sample; underlined parameter is outside of bounds of the invention.

Example 11

Binder materials as listed in Table 13 were prepared. These binder materials were mixed in the volume ratio of 30:70 with cBN powder materials each containing particles of 6 to 8 μm, 3 to 5 μm and smaller than 2 m in particle size in the ratio of 5:3:2, to prepare mixed powder materials. These mixed powder materials were filled in Mo vessels to be sintered under a superhigh pressure of 50 Kb at a temperature of 1300 °C.

The sintered compacts thus obtained were subjected to X-ray diffraction, so that it was observed that the compacts presented peaks based on substances as shown in Table 14.

The respective sintered compacts were worked into cutting tool, to cut round bars of SKD-11 materials ($H_{RC}$:60 to 63) each having axial grooves in four portions on the outer peripheral surface. Cutting conditions were as follows:

Cutting Speed: 120 m/min.
Depth of Cut: 0.2 mm
Feed: 0.2 mm/rev.

Table 14 also shows the results of the cutting test.

Table 13

| Sample | Composition of Binder (wt.%) | ** |
|---|---|---|
| ca-22 | 60 $(Ti_{0.85},W_{0.15})(C_{0.1},N_{0.9})_{0.85}$ 40$Al_3Ti$ | 89.4 : 10.6 |
| ca-23 | 75 $(Ti_{0.9},W_{0.1})(C_{0.1},N_{0.9})_{0.8}$ 25Al | 90 : 10 |
| * ca-24 | 60 $(Ti_{0.85},W_{0.15})(C_{0.1},N_{0.9})_{\underline{0.88}}$ 30Al, 10WC | 79.6 : 20.4 |
| * ca-25 | 65 $(Ti_{0.9},W_{0.1})(C_{0.1},N_{0.9})_{\underline{0.48}}$ 25Al, 10WC | 85.4 : 14.6 |
| ca-26 | 45$TiN_{0.75}$, 40$Al_3Ti$, 15WC | 91.0 : 9.0 |

* comparative sample; underlined parameter is out of bounds of the invention.

Table 14

| Sample | Result of X-Ray Diffraction | Time to Breaking ~~Tip~~ insert (min.) |
|---|---|---|
| ca-22 | cBN, (Ti,W) (C,N), $TiB_2$, $AlB_2$, AlN, $WB_2$ | 26 |
| ca-23 | cBN, (Ti,W) (C,N), $TiB_2$, $AlB_2$, AlN, $WB_2$, W | 30 |
| * ca-24 | cBN, (Ti,W) (C,N) $TiB_2$, $AlB_2$, AlN, WC | 5 |
| * ca-25 | cBN, (Ti,W) (C,N) $TiB_2$, $AlB_2$, AlN, W, $Ti_3Al$ | 7 |
| ca-26 | cBN, (Ti,W) (C,N), $TiB_2$, $AlB_2$, AlN, $WB_2$, W | 33 |

* comparative sample

Example 12

Nitride or carbo-nitride powder containing Ti was mixed with aluminum powder and WC powder and pulverized through a pot and a ball of cemented carbide to prepare binder powder materials each being smaller than 1μm in average particle size as listed in Table 15. Such binder powder materials were mixed in the volume ratio of 45:55 with cBN powder materials each being smaller than 1.5 μm in particle size to prepare mixed powder materials. These mixed powder materials were filled in Mo vessels placed with discs of cemented carbide of WC-10wt.%Co. Then each vessel was introduced in a superhigh pressure/temperature apparatus, to be sintered at a pressure of 53 Kb and a temperature of 1350 °C for 30 minutes.

The sintered compacts were subjected to X-ray diffraction, to observe peaks of cBN, carbide, nitride and carbo-nitride containing Ti in every sintered compact. Peaks considered as those of $TiB_2$, $AlB_2$ and AlN and boride of W or W were recognized in addition to the aforementioned substances in the samples da-1 to da-7. Further, peaks considered as those of $AlB_2$, AlN, WC, boride of W and a small amount of $TiB_2$ were observed in the sample da-8 in addition to the peaks of cBN and (Ti,W) (C,N) and peaks of cBN, Ti(C,N), $TiB_2$, $AlB_2$ and AlN were observed in the sample da-9 while peaks considered as those of cBN, (Ti,W) (C,N), $TiB_2$ and boride of W and a small amount of $AlB_2$ and AlN were observed in the sample da-10 and peaks of cBN, (Ti,W) (C,N), AlN, $AlB_2$, $TiB_2$, boride of W, W and $Al_3Ti$ were observed in the sample da-11.

Then the structure of each sintered compact was observed through a scanning type electron microscope, so that it was found that fine cBN particles were mutually bonded to each other through bonding phases. Table 16 shows the results of measurement of Vickers hardness of these sintered compacts.

The respective sintered compacts were worked into cutting tools to cut round bars of SNCM-415 materials ($H_{RC}$: 58 to 61) of 100 mm in diameter each having two axial grooves in the outer peripheral surface. Cutting conditions were as follows:

Cutting Speed: 80 m/min.
Depth of Cut: 0.2 mm
Feed: 0.15 mm/rev.
Type: Dry

Table 16 also shows the results of measurement of the cutting periods to breaking of the inserts.

Table 15

| | Sample | Composition of Binder (wt.%) | ** |
|---|---|---|---|
| | da-1 | $60TiN_{0.7}$<br>25Al, 15WC | 93 : 7 |
| | da-2 | $60TiC_{0.65}$<br>30Al, 10WC | 95.5 : 4.5 |
| | da-3 | $55(Ti_{0.9},W_{0.1})(C_{0.5},N_{0.5})_{0.75}$<br>35Al, 10WC | 84.3 : 15.7 |
| | da-4 | $60(Ti_{0.8},Ta_{0.1},Mo_{0.05},W_{0.05})(C_{0.7},N_{0.3})_{0.8}$,30Al, 10WC | 74.9 : 25.1 |
| | da-5 | $50(Ti_{0.8},Zr_{0.2})(C_{0.2},N_{0.8})_{0.73}$<br>40Al, 10WC | 74.9 : 25.1 |
| | da-6 | $55(Ti_{0.9},V_{0.05},Hf_{0.05})(C_{0.6},N_{0.4})_{0.68}$, 35Al, 10WC | 84.7 : 15.3 |
| | da-7 | $55(Ti_{0.85},Nb_{0.10},Cr_{0.05})(C_{0.9},N_{0.1})_{0,63}$,25Al, 20WC | 75.9 : 24.1 |
| * | da-8 | $\underline{50}(Ti_{0.75},W_{\underline{0.25}})(C_{0.7},N_{0.3})_{0.7}$,<br>30Al, <u>20WC</u> | <u>62.6 : 37.4</u> |
| * | da-9 | $72Ti(C_{0.5},N_{0.5})_{0.7}$<br>25Al, <u>3WC</u> | <u>98.7 : 1.3</u> |
| * | da-10 | $72(Ti_{0.8},W_{0.2})(C_{0.6},N_{0.4})_{0.7}$<br><u>18Al</u>, 10WC | 75.2 : 24.8 |
| * | da-11 | $37(Ti_{0.9},W_{0.1})(C_{0.1},N_{0.9})_{0.75}$<br><u>53Al</u>, 10WC | 81.4 : 18.6 |

* comparative sample ; underlined parameters are out of bounds of the invention.

Table 16

| Sample | Vickers Hardness | Time to Breaking of ~~Tip~~ insert (min.) |
|---|---|---|
| da-1 | 3200 | 75 |
| da-2 | 3250 | 55 |
| da-3 | 3300 | 63 |
| da-4 | 3300 | 82 |
| da-5 | 3200 | 68 |
| da-6 | 3250 | 71 |
| da-7 | 3200 | 66 |
| * da-8 | 3300 | 13 |
| * da-9 | 3000 | 20 |
| * da-10 | 3100 | 25 |
| * da-11 | 2800 | 3 |

* comparative sample

Example 13

$(Ti_{0.9},W_{0.1})$ $(C_{0.1},N_{0.9})_{0.7}$, Al and WC powder were mixed to obtain binder powder smaller than 1µm in particle size. The composition of the binder powder was 57wt.%$(Ti_{0.9},W_{0.1})$ $(C_{0.1},N_{0.9})_{0.7}$-33wt.%Al-10wt.%WC. The atomic ratio of Ti to W in the binder was 84.6:15.4. Binder materials of such powder were mixed with cBn powder materials as listed in Table 17 to prepare mixed powder materials. Referring to Table 17, the sample da-18 was prepared through cBN powder of 3 to 5µm in particle size.

The mixed powder materials thus obtained were sintered under a superhigh pressure similarly to Example 12, to obtain sintered compacts. These sintered compacts were worked into cutting tools.

The tools thus obtained were applied to cut end surfaces of round bars of SKD11 ($H_{RC}$: 60 to 62) of 100 mm in diameter. Cutting conditions were as follows:

Cutting Speed: 150 m/min.
Depth of Cut: 0.5 mm
Feed: 0.1 mm/tip
Type: Dry

Table 17 also shows the numbers of times capable of cutting.

Table 17

| Sample | cBN Particle Size | Content (vol.%) | Number of Times Capable of Cutting |
|---|---|---|---|
| da-12 | smaller than 2 μm | 65 | 29 |
| da-13 | 1 ~ 2 μm | 60 | 28 |
| da-14 | smaller than 1 μm | 55 | 33 |
| da-15 | " | 50 | 31 |
| da-16 | 1 ~ 2 μm | 68 | 4 |
| da-18 | 3 ~ 5 μm | 60 | 8 |

Example 14

Binder powder materials smaller than 1μm in particle size were prepared as listed in Table 18. These binder powder materials were mixed in the volume ratio of 43:57 with cBN powder materials each being smaller than 1μm in particle size to obtain mixed powder materials. These mixed powder materials were introduced in Mo vessels to be sintered under a superhigh pressure. Sintering was performed by retaining the mixed powder materials under 48 Kb and 1330°C for 30 minutes. The respective sintered compacts thus obtained were subjected to X-ray diffraction, so that it was observed that peaks of substances as shown in Table 19 are present.

These sintered compacts were worked into cutting tools, to perform a cutting test. Works were formed by SUJ-2 round bars ($H_{RC}$: 59 to 60) of 80 mm in diameter each having four holes of 6 mm in diameter axially separated at intervals of 10 mm in the diametrical direction. Cutting conditions were as follows:

Cutting Speed: 100 m/min.
Depth of Cut: 0.2 mm
Feed: 0.10 mm/rev.
Type: Dry

Table 19 also shows the cutting periods to breaking of the inserts measured in the cutting test.

Table 18

| Sample | Composition of Binder (wt.%) | ** |
|---|---|---|
| da-19 | $65(Ti_{0.85},Ta_{0.15})(C_{0.3},N_{0.7})_{0.80}$, $35Al_3Ti$ | 88.7 : 11.3 |
| da-20 | $70(Ti_{0.90},W_{0.10})(C_{0.5},N_{0.5})_{0,80}$, 30Al | 90 : 10 |
| * da-21 | $60(Ti_{0.85},W_{0.15})(C_{0.5},N_{0.5})_{\underline{0.87}}$, 30Al, 10WC | 79.6 : 20.4 |
| * da-22 | $65(Ti_{0.90},W_{0.10})(C_{0.3},N_{0.7})_{\underline{0.48}}$, 25Al, 10WC | 85.4 : 14.6 |
| da-23 | $45TiC_{0.8}$, $40Al_3Ti$, 15WC | 93.5 : 6.5 |

* comparative sample; underlined parameter is out of bounds of the invention.

Table 19

| Sample | Result of X-Ray Diffraction | Time to Breaking of ~~Tip~~ insert (min.) |
|---|---|---|
| da-19 | CBN, (Ti,Ta) (C,N) $TiB_2$,$AlB_2$,AlN,$WB_2$ | 35 |
| da-20 | CBN, (Ti,W) (C,N) $TiB_2$,$AlB_2$,AlN, $WB_2$,W | 86 |
| * da-21 | CBN, (Ti,W) (C,N) $TiB_2$,$AlB_2$,AlN, $WB_2$ | 9 |
| * da-22 | CBN, (Ti,W) (C,N) $TiB_2$,$Ti_3Al$,$AlB_2$, AlN,W | 12 |
| da-23 | CBN, (Ti,W) (C,N) $TiB_2$,$AlB_2$,AlN, $WB_2$ | 73 |

* comparative sample

Although the present invention has been described and illustrated in detail, it is clearly understood that the same is by way of illustration and example only and is not to be taken by way of limitation, the scope of the present invention being limited only by the terms of the appended claims.

## Claims

1. A hard sintered compact for a tool obtained by sintering a mixture containing about 50 to 75 percent by volume of cubic boron nitride and a binder under a high pressure,

   said binder containing:

   about 20 to 50 percent by weight of Al in the form aluminium metal or an aluminium compound and one or more Ti compounds selected from a group of $TiN_z$ $Ti(C,N)_z$, $TiC_z$, $(Ti,M)C_z$, $(Ti,M)(C,N)_z$ and $(Ti,M)N_z$ (where M indicates a transition metal of the group IVa, Va or VIa of the periodic table excepting Ti and z is within a range of $0.5 \leqq z \leqq 0.85$), wherein

   the atomic ratio of the content of Ti to the content of said transition metal element of the group IVa, Va or VIa of the periodic table including Ti being about 2/3 to 97/100, and further containing

   tungsten in the form of at least one of said Ti compound and WC and the total tungsten concentration in said binder being about 4 to 40 percent by weight.

2. A hard sintered compact for a tool in accordance with claim 1, wherein said hard sintered compact contains cubic boron nitride, TiN, Ti(C,N), TiC, (Ti,M)C, (Ti,M) (C,N) and (Ti,M)N, titanium boride, aluminum boride, aluminum nitride, tungsten compound and/or tungsten.

3. A hard sintered compact for a tool in accordance with claim 2, wherein said sintered compact has continuous bonding phases and fine cubic boron nitride particles filled around or in clearances between coarse cubic boron nitride particles.

4. A hard sintered compact for a tool in accordance with claim 1, wherein said tungsten is mixed in the form of tungsten boride or WC.

5. A hard sintered compact for a tool in accordance with claim 1, wherein said Al is mixed in the form of an Al compound.

6. A hard sintered compact for a tool in accordance with claim 1, wherein about 65 to 75 percent by volume of said cubic boron nitride is contained and said binder contains about 20 to 35 percent by weight of Al while said Ti compound is expressed as $(TiC_z,MC)_y$-$MN_{1-y}$ or (Ti,m) $(Cy,N_{1-y})$ (where M indicates a transition metal element of the group IVa, Va or VIa of the periodic table excepting Ti and $0 < y \leqq 0.3$).

7. A hard sintered compact for a tool in accordance with claim 1, wherein
about 65 to 75 percent by volume of said cubic boron nitride is contained,
said binder contains about 25 to 50 percent by weight of Al, and
said Ti compound is expressed as $(TiC_z,MC)_y$-$(MN)_{1-y}$ or (Ti,M) $(C_y,N_{y-1})$ (where M indicates a transition metal of the group IVa, Va or VIa of the periodic table excepting Ti and $0.3 < y < 1.0$).

8. A hard sintered compact for a tool in accordance with claim 1, wherein about 50 to 65 percent by volume of said cubic boron nitride is contained and the average particle size thereof is smaller than about 2µm.

9. A hard sintered compact in accordance with claim 9, wherein said cubic boron nitride powder is smaller than about 1 µm in average particle size.

10. A method of manufacturing a hard sintered compact for a tool comprising:
a step of mixing about 50 to 75 percent by volume of cubic boron nitride powder with about 25 to 50 percent by volume of binder to obtain mixed powder, said binder containing about 20 to 50 percent by weight of Al in the form of aluminium metal or an aluminium compound and one or more Ti compounds selected from those expressed as $TiN_z$, $Ti(C,N)_z$, $TiC_z$, $(Ti,M)C_z$, $(Ti,M)(C,N)_z$ and $(Ti,M)N_z$ - (where M indicates a transition metal element of the group IVa, Va or VIa of the periodic table excepting Ti and z is within a range of $0.5 \leqq z \leqq 0.85$), the atomic ratio of the content of Ti to that of said transition metal element of the group IVa, Va or VIa of the periodic table including Ti in said binder being about 2/3 to 97/100 and further containing tungsten in the form of at least one of said Ti compound and WC the total concentration of said tungsten in said binder being about 4 to 40 percent by weight; and
a step of sintering said mixed powder under cBN-stable superhigh pressure conditions.

11. A method of manufacturing a hard sintered compact for a tool in accordance with claim 10, wherein said tungsten is mixed in the form of tungsten boride or WC.

12. A method of manufacturing a hard sintered compact for a tool in accordance with claim 10, wherein said Al is mixed in the form of an Al compound.

13. A method of manufacturing a hard sintered compact for a tool in accordance with claim 10, wherein
about 65 to 75 percent by volume of said cubic boron nitride is contained,
said binder contains about 20 to 35 percent by weight of Al, and
said Ti compound is expressed as $(TiC_Z,MC)_y$-$(MN)_{1-y}$ or (Ti,M) $(C_y,\ N_{1-y})$ (where M indicates said transition metal element of the group IVa, Va or VIa of the periodic table excepting Ti and $0 < y \leqq 0.3$).

14. A method of manufacturing a hard sintered compact for a tool in accordance with claim 10, wherein

about 65 to 75 percent by volume of said cubic boron nitride is contained,

said binder contains about 25 to 50 percent by weight of Al, and

said Ti compound is expressed as $(TiC_Z,MC)_y$-$(MN)_{1-y}$ or (Ti,M) $(C_y,N_{1-y})$ (where M indicates said transition metal element of the group IVa, Va or VIa of the periodic table excepting Ti and 0.3 < y <1.0).

**15.** A method of manufacturing a hard sintered compact for a tool in accordance with claim 10, wherein about 50 to 65 percent by volume of said cubic boron nitride powder is contained and the same is smaller than about 2µm in average particle size.

**16.** A method of manufacturing a hard sintered compact for a tool in accordance with claim 10, wherein said cubic boron nitride powder is smaller than about 1 µm in average particle size.

## Revendications

**1.** Comprimé fritté dur obtenu en frittant un mélange contenant environ 50 à 75 % en volume de nitrure de bore cubique et un liant sous une pression élevée,

ce liant contenant :

environ 20 à 50 % en poids d'Al sous forme d'aluminium métallique ou d'un composé de l'aluminium et un ou plusieurs composés du titane choisi parmi $TiN_z$, Ti(C,N) $_z$, $TiC_z$, $(Ti,M)C_z$, (Ti,M) $(C,N)_z$ et $(Ti,M)N_z$ (où M désigne un métal de transition des groupes IVa, Va ou VIa de la classification périodique, à l'exception de Ti, et z est dans l'intervalle de $0,5 \leq z \leq 0,85$), dans lequel

le rapport atomique de la teneur en Ti à la teneur en cet élément de métal de transition des groupes IVa, Va ou VIa de la classification périodique y compris Ti étant d'environ 2/3 à 97/100, et contenant en outre

du tungstène sous la forme de ce composé de Ti et/ou WC et la concentration totale en tungstène dans ce liant étant d'environ 4 à 40 % en poids.

**2.** Comprimé fritté dur pour un outil, selon la revendication 1, dans lequel ce comprimé fritté dur contient du nitrure de bore cubique, TiN, Ti(C,N), TiC, (Ti,M)C, (Ti,M)(C,N) et (Ti,M)N, du borure de titane, du borure d'aluminium, du nitrure d'aluminium, un composé du tungstène et/ou du tungstène.

**3.** Comprimé fritté dur pour un outil, selon la revendication 2, dans lequel ce comprimé fritté contient des phases de liaison continues et de fines particules de nitrure de bore cubique dispersées autour ou dans les espaces libres entre les particules grossières de nitrure de bore cubique.

**4.** Comprimé fritté dur pour un outil selon la revendication 1, dans lequel ce tungstène est mélangé sous forme de borure de tungstène ou de WC.

**5.** Comprimé fritté dur pour un outil selon la revendi cation 1, dans lequel ce Al est mélangé sous la forme d'un composé de l'aluminium.

**6.** Comprimé fritté dur pour un outil, selon la revendication 1, contenant environ 65 à 75 % en volume de ce nitrure de bore cubique, ce liant contenant environ 20 à 35 % en poids d'Al, tandis que ce composé de .Ti est représenté par $(TiC_z,MC)_y$-$MN_{1-y}$ ou (Ti,M) $(C_y,N_{1-y})$ (où M désigne un élément de métal de transition des groupes IVa, Va ou VIa de la classification périodique à l'exception de Ti et $0 < y \leq 0,3$.

**7.** Comprimé fritté dur pour un outil, selon la revendication 1, contenant

environ 65 à 75 % en volume de ce nitrure de bore cubique,

ce liant contenant environ 25 à 50 % en poids d'Al, et

ce composé Ti étant représenté par (Ti $C_z$,MC$)_y$-$(MN)_{1-y}$ ou (Ti ,M)$(C_y,N_{y-1})$ (où M désigne un métal de transition ou les groupes IVa; Va ou VIa de la classification périodique à l'exception de Ti et 0,3 < y < 1,0).

**8.** Comprimé fritté dur pour un outil selon la revendication 1, contenant environ 50 à 65 % en volume de ce nitrure de bore cubique, la taille moyenne de particule de celui-ci étant inférieure à environ 2 µm.

**9.** Comprimé fritté dur selon la revendication 9, dans lequel cette poudre de nitrure de bore cubique a une taille de particule moyenne inférieure à 1 $\mu$m.

**10.** Procédé de fabrication d'un comprimé fritté dur pour un outil, comprenant :
un stade de mélange d'environ 50 à 75 % en volume de poudre de nitrure de bore cubique avec environ 25 à 50 % en volume de liant pour obtenir une poudre mélangée, ce liant contenant environ 20 à 50 % en poids d'Al sous forme d'aluminium métallique ou d'un composé de l'aluminium, et un ou plusieurs composés de Ti choisis parmi ceux représentés par $TiN_z$, $Ti(C,N)_z$, $TiC_z$, $(Ti,M)C_z$, $(Ti,M)(C,N)_z$ et $(Ti,M)N_z$ (où M indique un élément de métal de transition des groupes IVa, Va ou VIa de la classification périodique à l'exception de Ti et z est dans l'intervalle de $0,5 \leq z \leq 0,85$), le rapport atomique de la teneur en Ti à celle de cet élément de métal de transition des groupes IVa, Va ou VIa de la classification périodique y compris Ti dans ce liant étant d'environ 2/3 à 97/100 et contenant en outre du tungstène sous la forme de ce composé de Ti et/ou de WC, la concentration totale de ce tungstène dans ce liant étant d'environ 4 à 40 % en poids ; et
un stade de frittage de cette poudre mélangée dans des conditions de pression super élevées dans lesquelles le nitrure de bore cubique est stable.

**11.** Procédé de fabrication d'un comprimé fritté dur pour un outil, selon la revendication 10, dans lequel ce tungstène est mélangé sous la forme de borure de tungstène ou de WC.

**12.** Procédé de fabrication d'un comprimé fritté dur pour un outil, selon la revendication 10, dans lequel cet Al est mélangé sous la forme d'un composé de Al.

**13.** Procédé de fabrication d'un comprimé fritté dur pour un outil, selon la revendication 10, contenant environ 65 à 75 % en volume de ce nitrure de bore cubique, ce liant contenant environ 20 à 35 % en poids d'Al, et
ce composé du Ti étant représenté par $(TiC_z,MC)_y\text{-}(MN)_{1\text{-}y}$ ou $(Ti,M)(C_y, N_{1\text{-}y})$ (où M désigne cet élément de métal de transition des groupes IVa, Va ou VIa de la classification périodique à l'exception de Ti et $0 < y \leq 0,3$).

**14.** Procédé de fabrication d'un comprimé fritté dur pour un outil, selon la revendication 10, contenant environ 65 à 75 % en volume de ce nitrure de bore cubique, et
ce liant contenant environ 25 à 50 % d'Al, et
ce composé de Ti étant représenté par $(TiC_z,MC)_y\text{-}(MN)_{1\text{-}y}$ ou $(Ti,M)(C_y,N_{1\text{-}y})$ (où M désigne cet élément de métal de transition des groupes IVa, Va ou VIa de la classification périodique à l'exception de Ti et $0,3 < y < 1,0$).

**15.** Procédé de fabrication d'un comprimé fritté dur pour un outil, selon la revendication 10, contenant environ 50 à 65 % en volume de cette poudre de nitrure de bore cubique, celle-ci ayant une taille de particule moyenne inférieure à 2 $\mu$m environ.

**16.** Procédé de fabrication d'un comprimé fritté dur pour un outil, selon la revendication 10, dans lequel cette poudre de nitrure de bore cubique a une taille moyenne de particule inférieure à environ 1 $\mu$m.

## Patentansprüche

**1.** Hartgesinterter Preßkörper für Werkzeuge, welcher durch Sintern einer Mischung, die etwa 50 bis 75 Volumen-% von kubischem Bornitrid und einem Bindemittel enhält, unter hohem Druck erhalten wird, wobei das Bindemittel enthält:

- etwa 20 bis 50 Gewichts-% Aluminium in Form von Al-Metall oder einer Al-Verbindung und
- eine oder mehrere Ti-Verbindungen, ausgewählt aus der Gruppe von $TiN_z$, $Ti(C,N)_z$, $TiC_z$, $(Ti,M)C_z$ und $(Ti,M)N_z$ (wobei M ein Übergangsmetall aus der Gruppe IVa, Va oder VIa des Periodensystems ist, ausser wenn Ti und z innerhalb eines Bereichs von $0,5 \leq z \leq 0,85$ liegen), wobei
  - das Atomverhältnis des Ti-Gehalts zu dem Gehalt des Übergangsmetallelements aus der Gruppe IVa, Va oder VIa des Periodensystems inklusive Ti etwa 2:3 bis 97:100 beträgt, und wobei das Bindemittel ferner aufweist:
- Wolfram in Form von wenigstens einer der Ti-Verbindungen und WC, und wobei die Wolfram-Gesamtkonzentration in dem Bindemittel etwa 4 bis 40 Gewichts-% beträgt.

2. Hartgesinterter Preßkörper für Werkzeuge nach Anspruch 1, wobei der hartgesinterte Preßkörper kubisches Bornitrid, TiN, Ti(C,N), TiC, (Ti,M)C, (Ti,M) (C,N) und (Ti,M)N, Titanborid, Aluminiumborid, Aluminiumnitrid, Wolfram-Verbindung und/oder Wolfram enthält.

3. Hartgesinterter Preßkörper für Werkzeuge nach Anspruch 2, wobei der hartgesinterte Preßkörper kontinuierliche Bindungsphasen und feine Teilchen aus kubischem Bornitrid aufweist, die um grobe Teilchen aus kubischem Bornitrid herum oder in Zwischenräume dazwischen eingefüllt sind.

4. Hartgesinterter Preßkörper für Werkzeuge nach Anspruch 1, wobei das Wolfram in Form von Wolframborid oder WC beigemischt ist.

5. Hartgesinterter Preßkörper für Werkzeuge nach Anspruch 1, wobei das Aluminium in Form einer Al-Verbindung beigemischt ist.

6. Hartgesinterter Preßkörper für Werkzeuge nach Anspruch 1, wobei etwa 65 bis 70 Volumen-% des kubischen Bornitrids enhalten ist, und wobei das Bindemittel etwa 20 bis 35 Gewichts-% Aluminium enthält, während die Ti-Verbindung als $(TiC_z, MC)_y$-$MN_{1-y}$ oder $(Ti,M)(C_y,N_{1-y})$ ausgedrückt ist (wobei M ein Übergangsmetall aus der Gruppe IVa, Va oder VIa des Periodensystems ist, ausgenommen Ti und $0 < y \leqq 0,3$).

7. Hartgesinterter Preßkörper für Werkzeuge nach Anspruch 1, wobei
   - etwa 65 bis 75 Volumen-% von kubischem Bornitrid enthalten sind,
   - das Bindemittel etwa 25 bis 50 Gewichts-% Aluminium enthält, und
   - die Ti-Verbindung als $(TiC_z,MC)_y$-$(MN)_{1-y}$ oder $(Ti,M)(C_y,N_{y-1})$ ausgedrückt ist (wobei M ein Übergangsmetall aus der Gruppe IVa, Va oder VIa des Periodensystems ist, ausgenommen Ti und $0,3 < y < 1,0$).

8. Hartgesinterter Preßkörper für Werkzeuge nach Anspruch 1, wobei etwa 50 bis 65 Volumen-% kubisches Bornitrid enthalten sind und dessen durchschnittliche Teilchengröße weniger als etwa 2$\mu$m beträgt.

9. Hartgesinterter Preßkörper nach Anspruch 9, wobei das Pulver aus kubischem Bornitrid eine durchschnittliche Teilchengröße von weniger als etwa 1$\mu$m hat.

10. Verfahren zur Herstellung eines hartgesinterten Preßkörpers für Werkzeuge, welches umfaßt:
    - das Mischen von etwa 50 bis 75 Volumen-% von kubischem Bornitridpulver mit etwa 25 bis 50 Volumen-% von Bindemittel, um eine Pulvermischung zu erhalten, wobei das Bindemittel etwa 20 bis 50 Gewichts-% Aluminium in Form von Aluminiummetall oder einer Aluminiumverbindung und einem oder mehreren Ti-Verbindungen enthält, die aus denen ausgewählt sind, die durch $TiN_z$, $Ti(C,N)_z$, $TiC_z$, $(Ti,M)C_z$, $(Ti,M)(C,N)_z$ und $(Ti,M)N_z$ (wobei M ein Übergangsmetallelement aus der Gruppe IVa, Va oder VIa des Periodensystems ist, außer wenn Ti und z innerhalb eines Bereichs von $0,5 \leqq z \leqq 0,85$ liegen) ausgedrückt sind, wobei das Atomverhältnis des Ti-Gehalts zu dem des Übergangsmetallelements aus der Gruppe VIa, Va oder VIa der Periodentafel inkl. Ti in dem Bindemittel etwa 2/3 zu 97/100 beträgt und außerdem Wolfram in Form von wenigstens einer Ti-Verbindung und WC enthält, wobei die Gesamtkonzentration des Wolframs in dem Bindemittel etwa 4 bis 40 Gewichts-% beträgt, und
    - das Sintern der Pulvermischung unter cBN-stabilen Superhochdruckbedingungen.

11. Verfahren zur Herstellung eines hartgesinterten Preßkörpers für Werkzeuge nach Anspruch 10, wobei das Wolfram in Form von Wolframborid oder WC beigemischt wird.

12. Verfahren zur Herstellung eines hartgesinterten Preßkörpers für Werkzeuge nach Anspruch 10, wobei das Aluminium in Form einer Al-Verbindung beigemischt wird.

13. Verfahren zur Herstellung eines hartgesinterten Preßkörpers für Werkzeuge nach Anspruch 10, wobei
    - etwa 65 bis 75 Volumen-% des kubischen Bornitrids enthalten sind,
    - das Bindemittel ewa 20 bis 35 Gewichts-% Aluminium enthält, und
    - die Ti-Verbindung als $(TiC_z,MC)_y$ - $(MN)_{1-y}$ oder $(Ti,M)(C_y,N_{1-y})$ (wobei M ein Übergangsmetall aus der Gruppe IVa, Va oder VIa des Periodensystems ist, ausgenommen Ti und $0 \leqq y \leqq 0{,}3$) ausgedrückt ist.

**14.** Verfahren zur Herstellung eines hartgesinterten Preßkörpers für Werkzeuge nach Anspruch 10, wobei
- etwa 65 bis 75 Volumen-% des kubischen Bornitrids enthalten sind,
- das Bindemittel ewa 25 bis 50 Gewichts-% Aluminium enthält, und
- die Ti-Verbindung als $(TiC_z,MC)_y$ - $(MN)_{1-y}$ oder $(Ti,M)(C_y,N_{1-y})$ (wobei M ein Übergangsmetall aus der Gruppe IVa, Va oder VIa des Periodensystems ist, ausgenommen Ti und $0{,}3 \leqq y \leqq 1{,}0$) ausgedrückt ist.

**15.** Verfahren zur Herstellung eines hartgesinterten Preßkörpers für Werkzeuge nach Anspruch 10, wobei etwa 50 bis 65 Volumen-% des kubischen Bornitridpulvers enthalten sind und die durchschnittliche Teilchengröße desselben kleiner als etwa 2 $\mu$m ist.

**16.** Verfahren zur Herstellung eines hartgesinterten Preßkörpers für Werkzeuge nach Anspruch 10, wobei die durchschnittliche Teilchengröße des kubischen Bornitridpulvers kleiner als etwa 1 $\mu$m ist.

FIG.1

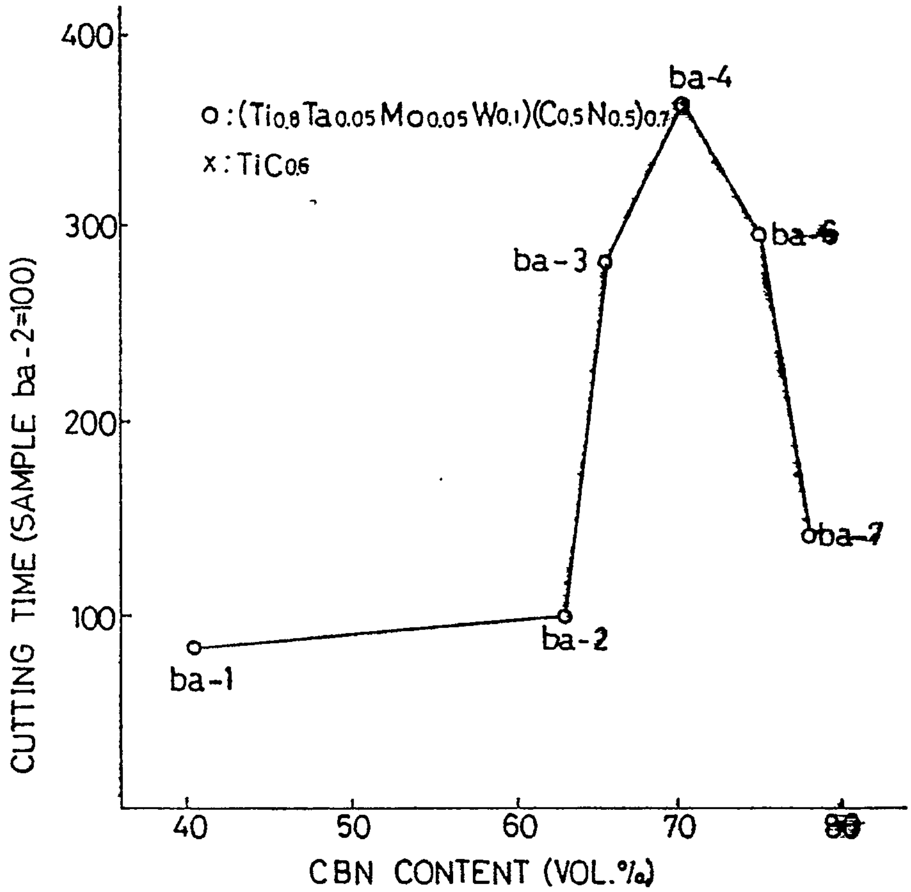

400
300
200
100
CUTTING TIME (SAMPLE ba-2=100)
o : (Ti0.8 Ta0.05 Mo0.05 W0.1)(C0.5 N0.5)0.7
x : TiC0.6
ba-1
ba-2
ba-3
ba-4
ba-6
ba-7
40
50
60
70
80
CBN CONTENT (VOL.%)


FIG.2

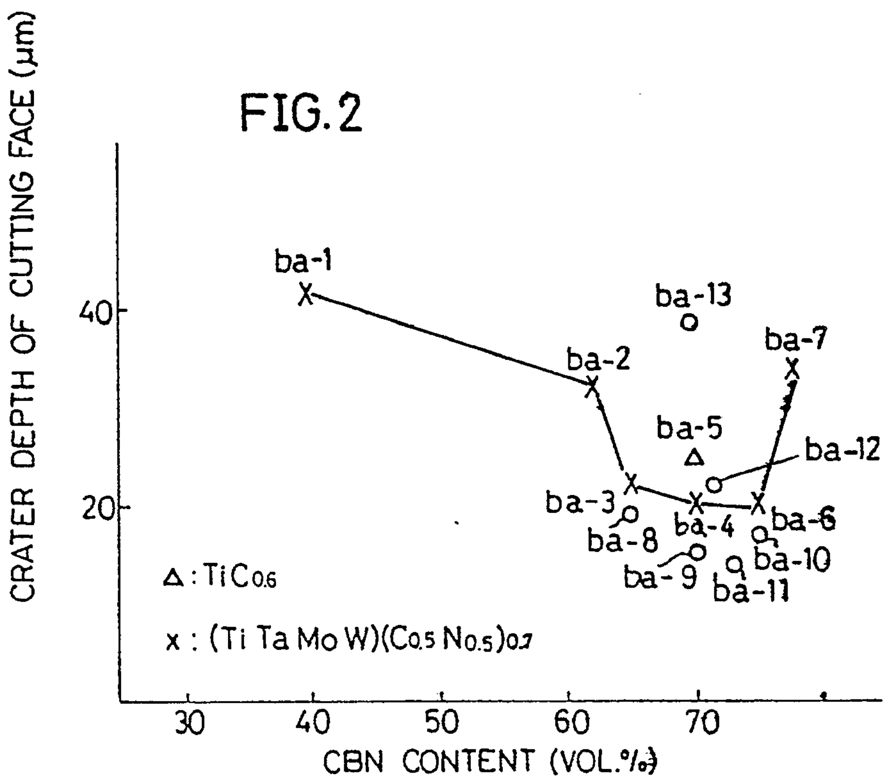

CRATER DEPTH OF CUTTING FACE (μm)
40
20
ba-1
ba-2
ba-3
ba-4
ba-5
ba-6
ba-7
ba-8
ba-9
ba-10
ba-11
ba-12
ba-13
Δ : TiC0.6
x : (Ti Ta Mo W)(C0.5 N0.5)0.7
30
40
50
60
70
CBN CONTENT (VOL.%)